Europäisches Patentamt

European Patent Office

Office européen des brevets

(11) Publication number: **0 088 739**
**A1**

## (12) EUROPEAN PATENT APPLICATION

(21) Application number: **83850052.8**

(22) Date of filing: **04.03.83**

(51) Int. Cl.³: **F 16 L 55/04, F 15 B 1/047**

(30) Priority: **10.03.82 US 356760**

(43) Date of publication of application: **14.09.83**
**Bulletin 83/37**

(84) Designated Contracting States: **DE FR GB IT SE**

(71) Applicant: **PR HYDRAULIK AB, Förradsvägen 2,**
**S-181 41 Lidingö (SE)**

(72) Inventor: **Dahlquist, Lars, Burevägen 13,**
**S-182 63 Djursholm (SE)**

(74) Representative: **Hammar, Ernst et al, H. ALBIHNS**
**PATENTBYRA AB Box 7664, S-103 94 Stockholm (SE)**

(54) **In line integral shock eliminator.**

(57) A self-contained pressure accumulator (10) for pressure fluid systems comprising a vessel (14) constructed of a flexible material defining an internal cavity adapted to receive and maintain a volume of pressurized gas, whereby the pressurized vessel (14) is placed in the fluid system such that the pressure within the cavity is operative in directions generally opposite the directions provided by the pressure of fluid of the system and cavity volume varies as a function of fluid pressure variation within the fluid system. The vessel may contain stabilizing ribs (22) to insure a relatively equal stress distribution along the vessel walls (20).

## In line integral fluid shock eliminator

The invention relates to a self-contained flexible pressure vessel which contains a pressurized gas and which can be placed in a pressurized fluid system so as to absorb shocks provided by sudden surges of pressure.

Variations in fluid flow in a fluid system create sudden surges of pressure. These pressure surges are transmitted to pipes and other components of a fluid system and have deleterious effects on component life. Components must accordingly be of sufficient strength to withstand these sudden shock surges.

For example, in positive displacement hydraulic pumps often used in industrial environments, a pump impeller or piston motion displaces fluid. Displacement of the fluid creates a pressure surge or shock within the hydraulic system. These pressure shocks may be at pressures many times higher than the average fluid pressure of the system. In other industrial hydraulic applications, multiple-position valves route fluid to different branches of hydraulic systems. Changes in fluid velocity or direction to different branches of the system also create fluid shocks. An industrial hydraulic system may be subject to sudden stops or throttling. Both stops and throttling create shocks in the system.

Another example of pressure surge occurs in pressurized water systems. When, for instance, a home faucet is opened water may be flowing steadily, but when it is closed a sudden shock is created due to the instant stoppage of water flow. Water pipes must be built to withstand these shocks. Other examples may be found in hydraulic systems for automobiles, aircraft, or power-generating facilities.

0088739

It is desirable to avoid these stress producing shocks so as to decrease the size and strength of fluid system components. In the past, accumulators or shock absorbers have been utilized to reduce or eliminate these shocks. To avoid shock in fluid lines, prior systems have suffered from slow response times which have rendered them less effective than is desired, and high purchase costs, which have placed them out of reach of most relatively inexpensive applications.

Present shock accumulators, which are designed to withstand high pressures of up to three thousand pounds per square inch (psi), are known as appendix-type accumulators. Such accumulators are manufactured by Greer Hydraulics, Inc. of Los Angeles, California under the "Pulse-Tone" or "Surge Kushon" trademarks.

Appendix-type accumulators comprise a pressure vessel with a gas pressured bladder contained therein, and means to attach the vessel to a fluid system, such as threads. Fluid flow direction is perpendicular to the bladder and pressure vessel. A baffle perpendicularly intersects the fluid flow. Changes in fluid pulsation or pressure creates shocks which lift a spring loaded poppet valve and cause fluid to flow within the pressure vessel. The fluid flow within the vessel strikes against the gas pressurized bladder. The pressure striking against the bladder changes the latter's volume and absorbs pressure shock energy. Appendix-type accumulators require high strength outer housings as well as spring loaded valves, screens, etc., to limit the expansion of the bladder, all which make them extremely expensive. In addition, by requiring a spring loaded valve, screens or the like, to limit the expansion of the relatively soft bladder, pressure shock absorption is reduced due to the presence such flow restricting components between the main hydraulic system and the energy absorbing bladder. Certain accumulators of the prior art have attempted to avoid such disadvantage by providing a button-type valve affixed directly to the bladder and adapted to be seated in the inlet of the accumulator when the bladder is fully expanded. Although this arrangement has eliminated the inlet port obstacles, nevertheless, the size of the inlet opening and the corresponding size of the button-type valve is limited in order to assure proper seating. Moreover, this arrangement still requires the usual high strength outer housing, a factor which in any event, is relatively expensive.

I have invented a novel pressure accumulator which is capable of being readily inserted directly into the existing or newly installed fluid components or which may be placed in any communicating relation with the pressure fluid without the need for the usual expensive external high strength outer housing. Moreover,the invention eliminates the need for additional spring loaded valves, screens, button-type valves or the like, thereby greatly reducing the cost of the accumulator while substantially improving the shock absorption performance.

The present invention relates to a self-contained pressure accumulator for pressure fluid systems comprising a vessel constructed of a flexible material and defining a cavity adapted to receive and maintain a volume of pressurized gas, whereby the pressurized vessel is placed in the fluid system such that the pressure within the cavity is operative in directions generally opposite the directions provided by the pressure fluid of the system and cavity volume varies as a function of fluid pressure variations within the fluid system. The accumulators of the present invention may be inserted into existing fluid systems.Means may be provided to restrain movement of the pressure vessel within the system. The vessel is preferably constructed of polyurethane. Other flexible materials capable of withstanding substantial initial gas pressures, such as cord-reinforced synthetic rubber or plastic materials are also contemplated.

The vessel may have any configuration suited to a particular environment. In one preferred embodiment of the invention the vessel has a spherical configuration. In a second embodiment of the invention, the vessel has a tubular or hot doglike shape and may have stabilizing ribs on the inner surface of the vessel to insure relatively equal stress distributions along the vessel walls. In a third embodiment, the vessel is a cylinder provided with end caps. In a fourth embodiment the vessel has an ellipsoidal shape. A fifth embodiment comprises a helical three-dimensional shape which winds around the inner walls of the fluid system.

The present invention is described in greater detail hereinbelow with reference to the drawing wherein:

Figure 1 is an elevational cross-sectional view of a vessel constructed according to the invention, installed in a hydraulic fluid pipe.

Figure 2 is an elevational partial cross-sectional view of the vessel shown as part of a prepackaged fluid fitting.

Figure 3 is an elevational partial cross-sectional view of an alternate embodiment of the vessel installed in a hydraulic pipe.

Figure 4 is an elevational partial cross-sectional view of a second alternate embodiment of the vessel installed in a hydraulic pipe.

Figure 5 is an elevational partial cross-sectional view of a third alternate embodiment of the vessel installed in a hydraulic pipe and

Figure 6 is an elevational partial cross-sectional view of a fourth alternate embodiment of the vessel shown installed in a hydraulic pipe.

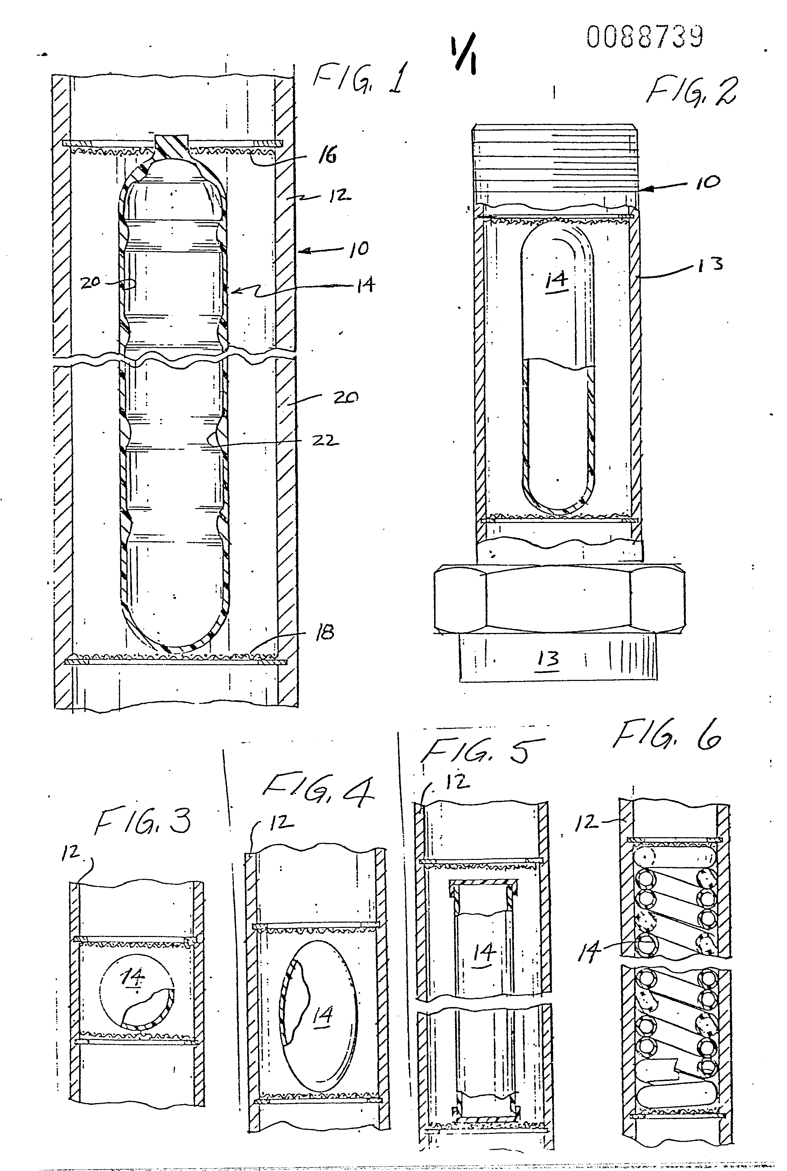

Referring to the drawing, there is shown in Figure 1, a pressure accumulator 10 in the form of a pipe 12 having pressure vessel 14 positioned between the upper retaining screen 16 and lower retaining screen 18. The pressure vessel 14 has a wall 20 and is precharged with a suitable, gaseous medium, typically air or nitrogen. The vessel 14 is placed within part of a fluid system, such as pipe 12 carrying a hydraulic medium under pressure. Pipe 12 functions as an accumulator housing for the vessel 14 with retaining means such as screens 16 and 18 to restrict motion of the vessel 14 within the system. It should be noted that the purpose of these screens 16 and 18 is only to restrict translational motion of the vessel 14 within the system. They are in no way intended to restrict expansion of the vessel 14 due to changes in gas pressure.

Since the present invention has no external restraint to limit expansion of the vessel when subjected to the gaseous precharge stresses, it must be constructed of a material which can limit vessel volume and withstand the precharge stresses. Surprisingly, polyurethane has been found to be an exceptionally well-suited material for this purpose. It has been found that polyurethane remains resilient and flexible, while possessing the ability to withstand three to four thousand psi precharge stresses.

Polyurethane may be blow molded in relatively inexpensive manufacturing processes and precharged up to predetermined gaseous pressure while the molded vessel cools within the molds. Such a process could conceivably reduce manufacturing costs to just a few dollars per unit. Relatively low prices could make this unit suitable for the presently untapped consumer and light industrial market.

Other flexible materials may also be suitable for lower precharge pressure ranges in the area of a few houndred psi. They may include any resilient, flexible, durable material. It should be noted, of course, that most of the resilience of the accumulator system is provided by compression and expansion of the precharged gas contained within the vessel.

The vessel 14 may have single or multiple piece construction, such as shown in Figures 1 and 5. In most applications the vessel 14 will be designed to be constructed with relatively thin walls 20 approximately between 1 and 5 millimeters in thickness and with outer diameters preferably approximately between about 10 mm and 30 mm depending upon the requirements of a particular system. However, it should be understood that a wide range of dimensional variations would be available to the practioner without departing from the scope of the invention. Alternative embodiments of the vessel 14 are shown in Figures 2-6. In Figure 2 the vessel has a cylindrical profile and hemispherically shaped ends having length approximately three times that of diameter. In Figure 3 the vessel 14 is of a spherical or golfball-like shape. In Figure 4 the vessel 14 is of an oblong, ellipsoidal shape. In Figure 5 the vessel 14 is a cylinder with end caps having length approximately three times that of diameter.

Figure 6 shows the vessel 14 in a helically-shaped configuration wrapped upon itself in a snake-like fashion along the inner wall of pipe 12 which forms, or is adapted to form part of a fluid system. The helical vessel as shown has a substantially circular cross-section, but other cross-sectional shapes may also be utilized.

The hot dog-shaped embodiment of Figures 1 and 2 may also contain structural reinforcements or ribs 22 along its wall 20 inner surface to help equalize stresses along the vessel walls induced by pressure surges of the fluid system. As shown, these reinforcements 22 will be molded along the inner wall surface which defines the vessel cavity. These reinforcements 22 may or may not be optional depending upon system pressures and manufacturing tolerances for molding the vessel wall thickness. For instance, normal vessel molding tolerances may lead to unequal thickness of the vessel walls. Upon installation, and receipt of a pressure surge from the fluid system, the relatively thinner wall sections might yield more than relatively thicker wall sections, leading to

... unstable vessel and possible vessel rupture.

The reinforcement could help to prevent excessive stresses in any possible thin sections of the walls. Also if it is envisioned that the accumulator vessels will be used in fluid systems having very rapid pressure surges in the order of plus or minus 1,000 psi, the reinforcement ribs 22 could help to stabilize compression and expansion of the vessel in controlled locations between the ribs.

The pressurized vessel 14 is placed in a hydraulic system such that the pressure in the cavity acts in directions opposite those of the directions provided by the hydraulic medium. The hydraulic medium presses the vessel to compress it whereas the vessel internal gas presses the vessel to expand the vessel.

The vessel gas precharge causes expansion stresses in the vessel walls. Placement of the vessel in a pressurized fluid system counteracts the expansion forces of the vessel precharge gas and thereby relieves a substantial portion of the expansion stresses in the vessel walls.

The vessel 14 is precharged with gas to a static pressure anywhere from slightly above ambient pressure to about 3,000 psi, depending upon the desired application. It is desirable to have the precharge approximately equal 50 to 75 percent of the average pressure within a system. For example, in a home water system connected to a dishwasher or a clothes washing machine, the household water supply pressure to that machine might be approximately 150 psi. Therefore, an accumulator vessel used in such a system would have a precharge of between 75 and 100 psi.

The vessel used in the above water supply system to the dishwasher would be placed within the water supply line and would thus have to be of a maximum diameter smaller

0088739

than the inner diameter of the supply pipe in order to prevent excessive restriction of water flow. It is also desirable to have the change in vessel internal gas pressure caused by outside induced fluid system pressure multiplied by the vessel volume to remain relatively constant throughout the change in pressure range of the system. In order to maintain a relatively constant multiplication product, there must be a sufficient volume of gas within the pressure accumulator vessel.

In order to have sufficient volume of gas while avoiding an excessive vessel diameter, more than one vessel could be placed with the water supply line. It is conceivable that a string or a number of pressure vessels would be placed in this line between the retaining screens 16 and 18. Alternatively, other retaining screens could be provided for one or more vessels in other areas of the system.

The vessel may be part of a self-contained hydraulic fitting which is installed in place of an existing fitting. In Figure 2, the vessel 14 and screens 16 and 18 are preinstalled in a male to female threaded pipe coupling 13. Coupling 13 acts as an accumulator 10 housing. A consumer could purchase the complete coupling-vessel unit and install it in his home water system.

Claims:

1. A self-contained vessel for pressure fluid systems constructed of a flexible material and defining an internal cavity adapted to receive and maintain a volume of pressurized gas, whereby the pressurized vessel may be placed in the fluid system such that the pressure within the cavity is operative in directions generally opposite the directions provided by the fluid pressure of the system and cavity volume varies as a function of fluid pressure variations within the system.

2. A resilient, self-contained vessel for pressure fluid systems having walls defining a cavity adapted to receive and maintain a volume of pressurized gas, whereby the pressurized vessel may be placed in the fluid system such that the fluid pressure within the cavity is operative in directions generally opposite the directions provided by the fluid pressure of the system so as to relieve the walls of said vessel from stresses caused by said pressurized gas and cavity volume varies as a function of fluid pressure variations within the system.

3. A resilient, self-contained vessel for pressure fluid systems constructed of polyurethane material and having walls defining a cavity adapted to receive and maintain a volume of pressurized gas, while maintaining substantially its basic dimensions and resilience, whereby the pressurized vessel may be placed in the fluid system such that the pressure within the cavity is operative in directions generally opposite the directions provided by the fluid pressure of the system, thereby relieving the walls of said vessel of substantial portions of the stresses caused initially by said pressurized gas in said cavity and cavity volume varies as a function of fluid pressure variations within the system.

4. A resilient, self-contained vessel for hydraulic systems constructed of polyurethane material and having walls defining an internal cavity adapted to receive and

- 10-

0088739

maintain a volume of gas at pressures up to and including relatively substantial pressures relative to the outside atmosphere, whereby the pressurized vessel may be placed in the hydraulic system such that the pressure within the cavity is operative in directions generally opposite the directions provided by the hydraulic medium thereby relieving substantial portions of the stresses on the walls of said vessel caused by the initial introduction of the pressurized gas, and cavity volume varies as a function of hydraulic pressure variations within the system, the capability of said polyurethane vessel to maintain the gas pressures within the cavity without significant variations of the vessel dimensions and resilience thereby obviating the need for an outer protective retaining housing.

5. The vessel according to claim 1 or 2 wherein the vessel is constructed substantially of polyurethane.

6. The vessel according to any one of claims 1, 2, 3 or 4, wherein the vessel walls have stabilizing means to insure a relatively equal stress distribution along the walls.

7. The vessel according to any one of claims 1, 2, 3 or 4, wherein the vessel includes more than one piece.

8. A pressure accumulator for pressure fluid systems comprising a housing, a self-contained vessel constructed of a flexible material and defining an internal cavity adapted to receive and maintain a volume of pressurized gas, whereby the pressurized vessel may be placed in the fluid system such that the pressure within the cavity is operative in directions generally opposite the directions provided by the fluid pressure of the system and cavity volume varies as a function of fluid pressure variations within the system.

9. A pressure accumulator for pressure fluid systems comprising a housing, a self-contained resilient vessel positioned within said housing, said vessel being constructed of polyurethane material and defining an internal cavity adapted to receive and maintain a volume of pressurized gas, while maintaining substantially its basic dimensions and resilience, whereby said housing and pressurized vessel may be placed in the fluid system such that the pressure within the cavity is operative in directions generally opposite the directions provided by the fluid pressure of the system, thereby relieving the walls of said vessel of substantial portions of the stresses caused initially by said pressurized gas in said cavity and cavity volume varies as a function of fluid pressure variations within the system.

10. A pressure accumulator for hydraulic systems comprising a housing, a self-contained resilient vessel positioned within said housing, said vessel being constructed of polyurethane material and having walls defining an internal cavity adapted to receive and maintain a volume of gas at pressures up to and including relatively substantial pressures relative to the outside atmosphere, whereby the housing and pressurized vessel may be placed in the hydraulic system such that the pressure within the cavity is operative in directions generally opposite the directions provided by the hydraulic medium whereby relieving substantial portions of the stresses on the walls of said vessel caused by the initial introduction of the pressurized gas, and cavity volume varies as a function of hydraulic pressure variations within the system, the capability of said polyurethane vessel to maintain the gas pressures within the cavity without significant variations of the vessel dimensions and resilience thereby obviating the need for an outer protective retaining housing.

11. The accumulator according to claim 10 wherein the

0088739

housing comprises an inlet and outlet connector for positioning within a hydraulic system.

12. The accumulator according to claim 8 wherein the vessel is constructed substantially of polyurethane.

13. The accumulator according to any one of claims 8, 9 or 10, wherein the vessel walls have stabilizing means to insure a relatively equal stress distribution along the walls.

14. The accumulator according to any one of claims 8, 9, 10 or 11, wherein the vessel includes more than one piece.

15. The accumulator according to any one of claims 8, 9, 10 or 11, wherein retaining means are provided to restrict translational movement of the vessel within the fluid system.

16. The accumulator according to claim 15 wherein the retaining means comprise a housing adapted for attachment to the fluid system.

17. The accumulator according to any one of claims 8, 9, 10 or 11, wherein the vessel has a generally spherical configuration.

18. The accumulator according to any one of claims 8, 9, 10 or 11, wherein the vessel has a generally ellipsoidal configuration.

19. The accumulator according to any one of claims 8, 9, 10 or 11, wherein the vessel has a generally cylindrical configuration with generally hemispherical shaped ends.

20. The accumulator according to any one of claims 8, 9, 10 or 11, wherein the vessel has a generally helical configuration.

FIG. 1    1/1    0088739    FIG. 2

FIG. 3    FIG. 4    FIG. 5    FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-1 959 030 (JOSAM MANUFACTURING CO) <br><br> * Page 2, line 4 - page 3, line 6; page 3, line 18 - page 4, line 12; page 12, line 12-20; figure 1 * | 1-4,8-11,13,15-17 | F 16 L 55/04 <br> F 15 B 1/04 |
| A | DE-A-1 775 217 (RHEIN. METALLWERK GmbH) <br> * Page 2, lines 5-22; figure 2 * | 1-4 | |
| A | US-A-2 530 190 (E.K. CARVER) <br><br> * Column 1, line 52, column 2, line 17; figure 2 * | 1-4,15-17,19 | |

**TECHNICAL FIELDS SEARCHED (Int. Cl. 3)**

F 16 F
F 16 L
F 15 B

The present search report has been drawn up for all claims

| Place of search | Date of completion of the search | Examiner |
|---|---|---|
| THE HAGUE | 31-05-1983 | SCHAEFFLER C.A.A. |